# EUROPEAN PATENT APPLICATION

(11) **EP 1 506 939 A2**
(43) Date of publication of application: **16.02.2005**
(21) Application number: 04019013.4
(22) Date of filing: 11.08.2004
(51) Int. Cl.: C01C 1/02

(54) **Process and apparatus for enriching ammonia**

(30) Priority: 13.08.2003 US 494729 P; 05.08.2004 US 911868
(71) Applicant: THE BOC GROUP, INC., Murray Hill, New Providence, New Jersey 07974 (US)
(72) Inventor: Ji, Wenchang, New Jersey 07920 (US); Shirley, Arthur Irving, New Jersey 08844 (US); Sadkowski, Piotr Jan, Surrey GU12 6PH (GB)
(74) Representative: Booth, Andrew Steven

(57) **Abstract**

A process for enriching a crude ammonia stream having moisture and/or metal impurities and/or gas impurities therein. The crude ammonia stream is condensed to form a crude liquid ammonia stream. A distillation membrane or pervaporation membrane is contacted with the crude liquid ammonia stream to form an enriched ammonia vapor stream, which is removed as a permeate. When the crude ammonia stream originates from a manufacturing tool, the enriched ammonia vapor stream may be recycled to the manufacturing tool. There is also an apparatus for enriching a crude ammonia stream.

## Description

The present invention relates to a process and apparatus for enriching a crude ammonia stream having metal impurities and/or gas impurities and/or moisture therein.

In semiconductor manufacturing, ammonia is used to remove a wide variety of contaminants, including moisture, gas impurities, and metals. Gas impurities include oxygen, nitrogen, hydrogen, carbon monoxide, and carbon dioxide. Metals include sodium, potassium, aluminum, calcium, iron, nickel, chromium, copper, manganese, and zinc.

It would be desirable to recover and recycle ammonia used in semiconductor manufacturing. Recovery and recycle would save raw material costs and reduce process effluent. The presence of contaminants in the ammonia prevents direct recovery and recycle.

U.S. Patent No. 6,065,306 describes a method for removing contaminants from crude ammonia streams. A crude ammonia stream is enriched by removal of moisture via a temperature swing adsorption unit and removal of gas impurities via a gas separation membrane.

It would be desirable to have a process and apparatus for recovering and recycling ammonia. It would further be desirable to have a process and apparatus for enriching a crude ammonia stream. It would still be further desirable to have a process and apparatus for removing moisture, metals, and gas impurities from a crude ammonia stream. It would still be further desirable to have a process and apparatus for enriching a crude ammonia stream in a semiconductor manufacturing process.

In a first aspect, the present invention provides a process for enriching a crude ammonia stream having moisture and/or metal impurities and/or gas impurities therein. The crude ammonia stream is condensed to form a crude liquid ammonia stream. A distillation membrane or pervaporation membrane is contacted with the crude liquid ammonia stream to form an enriched ammonia vapor stream, which is removed as a permeate. When the crude ammonia stream originates from a manufacturing tool, the enriched ammonia vapor stream may be recycled to the manufacturing tool.

When originating from manufacturing tooling, crude ammonia typically takes the form of a vapor. The vapor can be condensed to a substantially liquid state by reducing temperature and/or raising pressure. The condensing means (condenser) can take the form of any condensing and/or pressure vessel wherein temperature and/or pressure and/or volume can be regulated. The temperature range will typically vary from about -30 °C to about 10 °C. The pressure range will typically vary from about 1.18 to about 6.075 atmospheres absolute. The crude ammonia liquid can take any known thermodynamic form, such a critical liquid or a conventional liquid.

After condensation, the crude ammonia liquid is contacted with a distillation membrane or pervaporation membrane to yield an enriched ammonia vapor. The distillation membrane or pervaporation membrane evolves ammonia vapor but retains a substantial proportion of metal impurities and/or moisture as a retentate.

Pervaporation membranes typically operate by adsorbing liquid at the retentate side, diffusing through the membranes, and then desorbing at the permeate side. Distillation membranes typically operate by evaporation and diffusion through the membrane microporous structure. The operating temperature range will typically vary from about -30 °C to about 10 °C. At -30 °C, the operating pressure range will typically be at least about 1.18 atmospheres absolute. At 10 °C, the operating pressure will typically be at least about 6.075 atmospheres absolute. Preferably, the operating temperature of the membrane is in a range of about 0 °C to about 5 °C at a pressure selected such that the ammonia at the temperature will liquefy. For membrane distillation, at any operating temperature, the ammonia pressure should not exceed ammonia intrusion pressures of selected membranes at which ammonia would penetrate into the membrane microporous structure.

Distillation membranes are typically comprised of microporous materials, including microporous polymers. Distillation membrane materials are hydrophobic. The surface of the membranes typically cannot be wetted by water and ammonia. Typical pore size of microporous membranes ranges from about 0.1 to about 100 microns. The preferred membrane pore size ranges from about 0.1 to about 5 microns. The most preferred membrane pore size is about 0.2 microns. The microporous membranes can be made by various polymers, including polyvinylidene fluoride (PVDF), Teflon (PTFE), and polypropylene.

Pervaporation membrane materials are typically dense materials of the kind used in gas separation membranes. If a pervaporation membrane is used, there are no intrusion pressure limitations since there is no intrusion pressure for dense membranes.

The enriched ammonia vapor exiting the distillation membrane or pervaporation membrane module may then optionally be further enriched by passing it through a gas separation module to form a further-enriched ammonia vapor by removing a substantial proportion of the gas impurities. The module has a gas separation membrane that permits the passage of ammonia vapor but retains a substantial proportion of gas impurities as a retentate. Gas separation membranes are typically comprised of dense membranes made of polymeric materials. A preferred material is NAFION® polymer (E.I. du Pont de Nemours and Co.). NAFION® is a copolymer of tetrafluoroethylene and perfluoro 3,6-dioxa-4-methyl-7-octene-sulfonic acid. Another useful material is ethane-propene terpolymer and polychloroprene.

In the gas separation module, the contaminated ammonia product stream is compressed with a process compressor or other means to raise the feed pressure to a pressure calculated to prevent the ammonia from liquefying at the temperature at which the process will be conducted. The process may be conducted at temperatures ranging from between about -30 °C to about 30 °C. Preferably, the temperatures range from -30 °C to 10 °C. At -30 °C, the pressure should be less than about 1.18 atmospheres absolute. At 10 °C, the pressure should be less than about 6.075 atmospheres absolute. The most preferred temperature range is about 0 °C to about 5 °C. The ammonia stream is cooled prior to its introduction into the at least one membrane. If the process is carried out at sub-ambient temperatures, the compressed feed stream can be cooled within a heat exchanger. One type of heat exchanger, for example, is a two pass, plate-fin device in which a liquid coolant, such as obtained from a liquid coolant tank, is fed as a coolant stream through the heat exchanger. The cooled feed stream is fed to a membrane module, which can be housed within a cold box filled with insulating materials. The gas separation module can be a single module or unit or be a series of two or more of such modules or units.

If recycle of ammonia is desired, the enriched ammonia vapor is conveyed directly or indirectly to the manufacturing tool by any means known in the art. Typically, enriched ammonia vapor exiting the distillation membrane, pervaporation membrane, or the gas separation membrane will be of relatively low temperature and pressure. Also, some ammonia will have been lost in retentate streams and other process losses. Thus, it is desirable to transform the enriched ammonia vapor to a higher temperature and pressure and replenish lost ammonia prior to return to the manufacturing tool.

In a preferred process, enriched ammonia vapor exiting the distillation membrane, pervaporation membrane, or the gas separation membrane is condensed and makeup ammonia added thereto to form an enriched ammonia liquid. The enriched ammonia liquid is then vaporized and conveyed to the manufacturing tool for use. The condensing means employed to form the enriched ammonia liquid may be any condensing means (condenser) known in the art, including those condensing means described above. A preferred condensing means for this application is a heat pump condenser. Condensing temperatures and pressures are as described above. The vaporizing means employed to form the enriched ammonia vapor may be any vaporizing means known in the art such as a heat pump vaporizer or a two-pass, plate fin heat exchanger. A preferred vaporizing means is a heat pump vaporizer.

Although crude ammonia streams encountered in industrial practice will vary in contaminate content, a typical crude ammonia exiting semiconductor manufacturing tooling will typically have about 100 parts per million of impurities in the feed. Such impurities typically include nitrogen, oxygen, hydrogen, carbon monoxide, carbon dioxide, hydrocarbons, organics, moisture, and metals. Processed ammonia product streams from processes of the present invention will typically have about 10 parts per million or less of such impurities.

In a second aspect, the present invention provides a process for enriching a crude ammonia stream having moisture and/or metal impurities and/or gas impurities therein. The process has the following steps: a) conveying the crude ammonia stream to a first separator maintained under conditions sufficient to form a first crude ammonia liquid stream and a first crude ammonia vapor stream; b) contacting a gas separation membrane with the first crude ammonia vapor stream to form a first enriched ammonia vapor stream removed as a permeate; c) conveying the first enriched ammonia vapor stream to the first separator; d) conveying the first crude ammonia liquid stream to a second separator maintained under conditions sufficient to form a second crude ammonia liquid stream and a second enriched ammonia vapor stream as a product stream; e) contacting a gas distillation membrane with the second crude ammonia liquid stream to form a third enriched ammonia vapor stream removed as a permeate; and f) conveying the third enriched ammonia vapor stream to said first separator.

In a third aspect, the present invention provides apparatus for enriching a crude ammonia stream having moisture and/or metal impurities and/or gas impurities therein. The apparatus has a) a condenser for condensing the crude ammonia stream to form a crude liquid ammonia stream and b) a distillation membrane or pervaporation membrane that separates a permeate stream of an enriched ammonia vapor from said crude liquid ammonia stream.

In a fourth aspect, the present invention provides apparatus for enriching a crude ammonia stream having moisture and/or metal impurities and/or gas impurities therein. The apparatus has a) a first separator which is capable of forming a first crude ammonia liquid stream and a first crude ammonia vapor stream; b) a gas separation membrane which is capable of separating a first enriched ammonia vapor stream from the first crude ammonia vapor; c) a first conduit for conveying the first enriched ammonia vapor stream to the first separator; d) a second conduit for conveying said first crude ammonia liquid stream to a second separator wherein the second separator is capable of separating a second crude ammonia liquid stream and a second enriched ammonia vapor stream as a product stream from said first crude ammonia liquid stream; e) a gas distillation membrane which is capable of separating from said second crude ammonia liquid stream a third enriched ammonia vapor stream; and f) a third conduit for conveying the third enriched ammonia vapor stream to the first separator.

Preferred features of the present invention will now be described, by way of example only, with reference to the accompanying drawings, in which:
Figure 1 illustrates a schematic diagram of an embodiment of a process and apparatus for enriching a crude ammonia stream.
Figure 2 illustrates a schematic diagram of another embodiment of a process and apparatus for enriching a crude ammonia stream.
Figure 3 illustrates a schematic diagram of yet another embodiment of a process and apparatus for enriching a crude ammonia stream.
Figure 4 illustrates a schematic diagram of still another embodiment of a process and apparatus for enriching a crude ammonia stream.

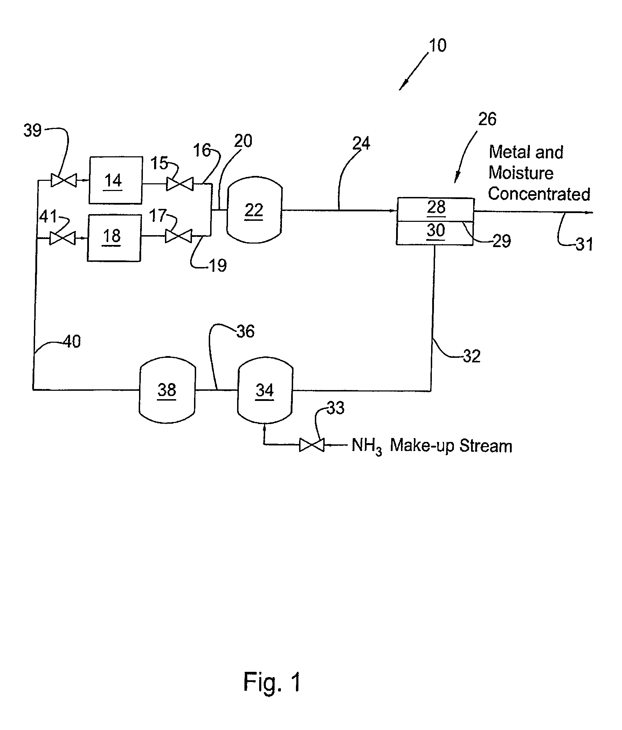

An embodiment of the apparatus of the present invention is seen in Figure 1 and is generally referenced by the numeral 10. Apparatus 10 represents a semiconductor manufacturing process or other manufacturing process wherein ammonia is used for cleaning purposes and is continuously recycled. Apparatus 10 has tools 14 and 18, which generally and schematically represent manufacturing tooling that produces crude ammonia as a process by-product. The specific structure or function of tools 14 and 18 or the number of tools is not critical to the invention. Crude ammonia in substantially vapor form is conveyed to a condensing vessel 22 through conduits 16 and 19, which converge into conduit 20. If desired or necessary, a compressor(s) (not shown) or a filter(s) (not shown) may be installed between tools 14/18 and condensing vessel 22. In condensing vessel 22, the crude ammonia is condensed to a substantially liquid state by reducing temperature and/or raising pressure. The crude ammonia liquid is conveyed to a distillation membrane or pervaporation membrane module 26 through a conduit 24. If desired or necessary, a compressor(s) (not shown) may be installed between condensing vessel 22 and module 26. Module 26 has a membrane 29, which has a retentate side 28 and a permeate side 30. A retentate stream 31 is withdrawn from the retentate side 28 of membrane 29. The retentate stream 31 is a concentrate of ammonia along with an elevated level of metal and/or moisture contaminants. The relative level of metal and moisture contaminates in the retentate stream 31 is higher than in the condensed crude ammonia. Ammonia evaporates at the permeate side 30 in the form of a first enriched ammonia vapor and through conduit 32 to a heat pump condenser 34. The first enriched ammonia vapor is condensed at condenser 34 via temperature reduction and/or pressure increase. Makeup ammonia is added at condenser 34 to form an enriched ammonia liquid, which is conveyed through a conduit 36 to a heat pump vaporizer 38. In vaporizer 38, the enriched ammonia liquid is vaporized to form a second enriched ammonia vapor, which is conveyed through a conduit 40 to tools 14 and 18 for use in the manufacturing process. Apparatus 10 has valves 15, 17, 33, 39, and 41 for regulating the flow of the various process streams therethrough.

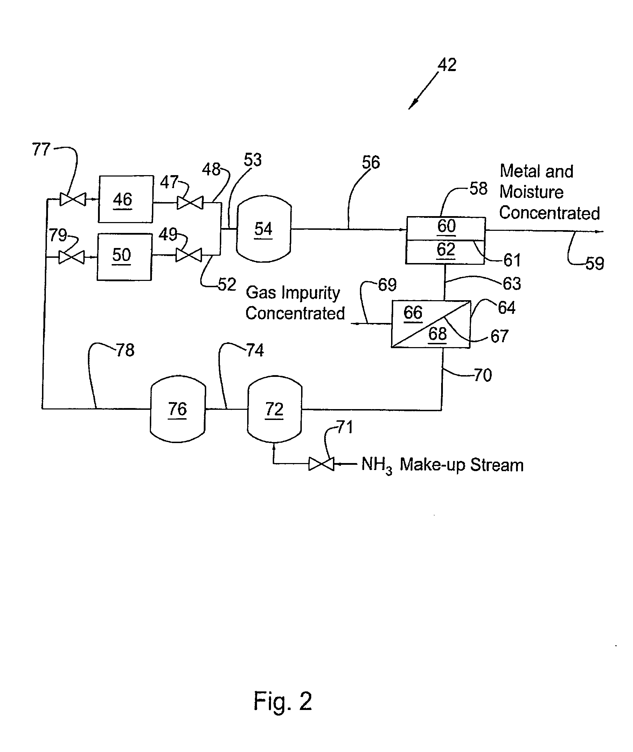

Another embodiment of the apparatus of the present invention is seen in Figure 2 and is generally referenced by the numeral 42. Apparatus 42 represents a manufacturing process wherein ammonia is used for cleaning purposes and is continuously recycled. Apparatus 42 has tools 46 and 50, which generally and schematically represent manufacturing tooling that produces crude ammonia as a process by-product. The specific structure or function of tools 42 and 50 or the number of tools is not critical to the invention. A crude ammonia stream is conveyed to a condensing vessel 54 through conduits 48 and 52, which converge into conduit 53. If desired or necessary, a compressor(s) (not shown) or a filter(s) (not shown) may be installed between tools 42/50 and condensing vessel 54. In condensing vessel 54, the crude ammonia is condensed to a substantially liquid state by reducing temperature and/or raising pressure. The crude ammonia liquid is conveyed to a membrane distillation or a pervaporation membrane module 58 through a conduit 56. If desired or necessary, a compressor(s) (not shown) may be installed between condensing vessel 54 and module 58. Module 58 has a membrane 61, which has a retentate side 60 and a permeate side 62. A retentate stream 60 is withdrawn from the retentate side 60 of membrane 61. The retentate stream 59 is a concentrate of ammonia and an elevated level of metal and moisture contaminants. Ammonia vapor evaporates from the permeate side 62 in the form of a first enriched ammonia vapor and is conveyed through a conduit 63 to a gas separation module 64. If desired or necessary, a compressor(s) (not shown) may be installed between module 58 and module 64. Module 64 has a retentate side 66, a membrane 67, and a permeate side 68. A retentate stream 69 is withdrawn from the retentate side 66 of membrane 67. Stream 69 has a vapor concentrate of ammonia and an elevated level of gas impurities. The passing of the first enriched ammonia vapor through module 64 results in a further enriched ammonia vapor referred to as the second enriched ammonia vapor, which is conveyed through a conduit 70 to a heat pump condenser 72. The second enriched ammonia vapor is condensed at condenser 72 via temperature reduction and/or pressure increase. Makeup ammonia is added at condenser 72 to form an enriched ammonia liquid, which is conveyed through a conduit 74 to a heat pump vaporizer 76. In vaporizer 76, the enriched ammonia liquid is vaporized to form a third enriched ammonia vapor, which is conveyed through a conduit 78 to tools 46 and 50 for use in the manufacturing process. Apparatus 42 has valves 47, 49, 71, 77, and 79 for regulating the flow of the various process streams therethrough.

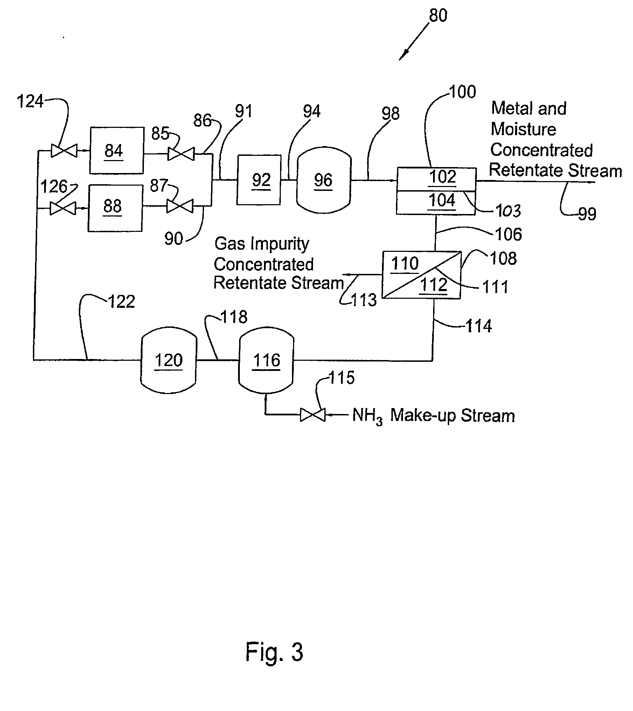

Another embodiment of the apparatus of the present invention is seen in Figure 3 and is generally referenced by the numeral 80. Apparatus 80 represents a semiconductor manufacturing process wherein ammonia is used for cleaning purposes and is continuously recycled. Apparatus 80 has tools 84 and 88, which generally and schematically represent manufacturing tooling that produces crude ammonia as a process by-product. The specific structure or function of tools 84 and 88 or the number of tools is not critical to the invention. A crude ammonia stream is conveyed to a TSA unit 92 through conduits 86 and 90, which converge into conduit 91. TSA refers to a temperature swing adsorber. TSA unit 92 removes part of or substantially all moisture from the crude ammonia stream. The crude ammonia stream is conveyed from TSA unit 92 to a condensing vessel 96 through conduit 94. If desired or necessary, a compressor(s) (not shown) or a filter(s) (not shown) may be installed between tools 84/88 and TSA unit 92 or condensing vessel 96. In condensing vessel 96, the crude ammonia stream is condensed to a substantially liquid state by reducing temperature and/or raising pressure to form a crude ammonia liquid. The crude ammonia liquid is conveyed to a membrane distillation or pervaporation membrane module 100 through a conduit 98. If desired or necessary, a compressor(s) may be installed between vessel 96 and module 100. Module 100 has a membrane 103, which has a retentate side 102 and a permeate side 104. A retentate stream 99 is withdrawn from the retentate side 102 of membrane 103. The retentate stream 99 is a concentrate of ammonia and an elevated level of metal and moisture contaminants. Ammonia vapor evaporates from the permeate side 104 in the form of a first enriched ammonia vapor and through a conduit 106 to a gas separation module 108. If desired or necessary, a compressor(s) may be installed between module 100 and module 108. Module 108 has a gas separation membrane 111. Membrane 111 has a retentate side 110 and a permeate side 112. A retentate stream 113 is withdrawn from the retentate side 110 of membrane 111. Stream 113 is a vapor concentrate of ammonia and an elevated level of gas impurities. Contacting membrane 111 with the first enriched ammonia vapor results in a second enriched ammonia vapor, which is conveyed though a conduit 114 to a heat pump condenser 116. The second enriched ammonia vapor is condensed at condenser 116 via temperature reduction and/or pressure increase. Makeup ammonia is added at condenser 116 to form an enriched ammonia liquid, which is conveyed through a conduit 118 to a heat pump vaporizer 120. In vaporizer 120, the enriched ammonia liquid is vaporized to form a third enriched ammonia vapor, which is conveyed through a conduit 122 to tools 84 and 88 for use in the manufacturing process. Apparatus 80 has valves 85, 87, 115, 124, and 126 for regulating the flow of the various process streams therethrough.

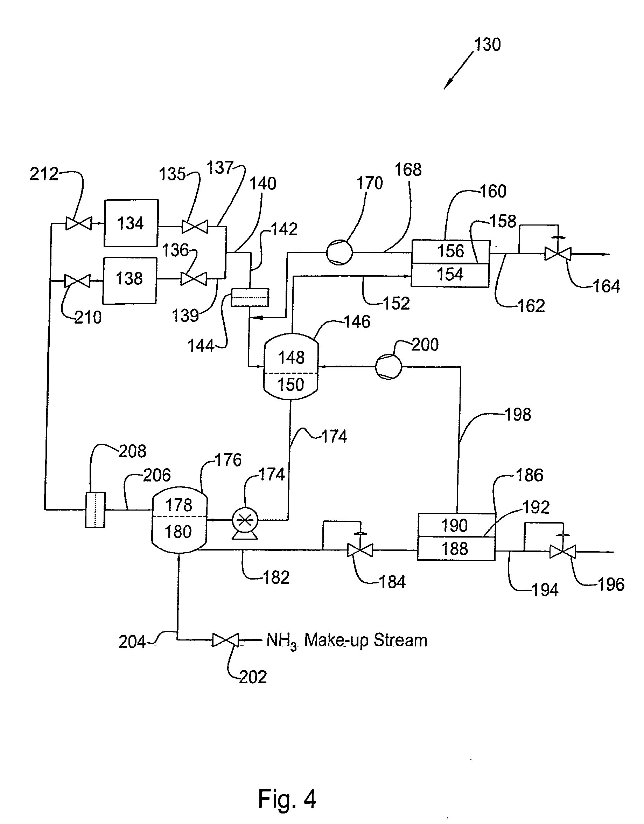

Another embodiment of the process of the present invention is seen in the Figure 4 and is generally referenced by the numeral 130. Apparatus 130 represents a manufacturing process wherein ammonia is used for cleaning purposes and is continuously recycled. Apparatus 130 has tools 134 and 138 which generally and schematically represent manufacturing tooling that produces crude ammonia as a process by-product. The specific structure or function of tools 134 and 138 or the number of tools is not critical to the invention. Crude ammonia vapor is conveyed through conduits 137 and 139, which converge into conduit 140. Conduit 140 merges into conduit 142, which conveys the crude ammonia vapor through a filter 144 into condensing vessel 146. In condensing vessel 146, an equilibrium is maintained between a vapor phase 148 and a liquid phase 150 by regulation of temperature, volume, and pressure. Desirably, the vapor phase 148 of vessel 146 is maintained at about 1.18 atmospheres absolute and the temperature is maintained at about -30°C. The ammonia vapor is conveyed from vessel 146 through conduit 152 to gas separation module 160. Module 160 has a membrane 158 of a dense polymeric material. Membrane 158 has a retentate side 154 and a permeate side 156. Membrane 158 permits the passage of ammonia vapor but not gas impurities. A retentate stream 162 is withdrawn from retentate side 154 of membrane 158. Retentate stream 162 is a concentrate of ammonia vapor along with an elevated or higher level of gas impurities. The enriched ammonia exiting module 160 is conveyed through a conduit 168 via the action of vacuum pump 170 into conduit 142 for return to condensing vessel 146. Liquid crude ammonia is conveyed from vessel 146 through conduit 172 via pump 174 to heat pump vaporizer 176. In vaporizer 176, an equilibrium is maintained between a vapor phase 178 and a liquid phase 180 by regulation of volume, temperature and pressure. Desirably, vapor phase 178 of vaporizer 176 is maintained at about 750 psig and the temperature is maintained at about 90°C. The enriched ammonia vapor is conveyed from vaporizer 176 through conduit 206 and filter 208 to tools 134 and 138 for use in the manufacturing process. The crude ammonia liquid exiting vaporizer 176 is conveyed through conduit 182 to a distillation membrane or pervaporation membrane module 186. Module 186 has a membrane 192, which has a retentate side 188 and a permeate side 190. Membrane 192 is comprised of a dense or microporous polymeric material. A retentate stream 194 is withdrawn from the retentate side 188 of membrane 192. The retentate stream 194 has a concentrate of ammonia along with an elevated level of metal impurities and water. The relative level of metal impurities in the retentate stream 194 is higher than in the crude ammonia liquid exiting vaporizer 176. Ammonia evaporates at the permeate side 190 to form an enriched ammonia vapor and is conveyed through conduit 198 to vessel 146 via the action of vacuum pump 200. Makeup ammonia is added to vaporizer 176 through conduit 204. The operating conditions of the distillation/pervaporation membrane module 186, gas separation module 160, condenser 146, and vaporizer 176 are as previously described. Apparatus 130 has valves 135, 136, 164, 184, 196, 202, 210, and 212 for regulating the flow of the various process streams through the various conduits.

A first separator of the type disclosed in Figure 4 retains and maintains crude ammonia at conditions, i.e., a volume level, temperature and pressure, sufficient to provide a vapor phase and a liquid phase. The first separator is sized with respect to the throughput of crude ammonia such that there is adequate headspace to provide a vapor phase. The first separator can take the form of any condensing and/or storage vessel or tank wherein temperature and/or pressure can be regulated. A preferred first separator is a condenser. Condenser temperature range will preferably range from about -30 °C to about 10 °C. At -30 °C, the pressure should be about 1.18 atmospheres absolute. At this feed pressure, a vacuum pump is needed at the permeate side of the membrane unit in order to generate the driving force for membrane permeation. At these conditions, a compressor is not required for the condenser. At 10 °C, the pressure should be about 6.075 atmospheres absolute. At this temperature, a compressor is needed to compress the ammonia stream prior to entering the condenser. At these conditions, a vacuum pump is not required for the membrane unit. The most preferable operating temperature range is about 0 °C to about 5 °C. In any case, the operating pressure of the membrane unit is maintained at less than ammonia vapor pressure corresponding to the condensation temperature to avoid ammonia condensation in the membrane unit. Operating pressure is regulated by using a pressure restriction device and/or raising the ammonia temperature slightly above the condensation temperature.

A second separator of the type disclosed in Figure 4 retains and maintains crude ammonia at conditions, i.e., a volume level, temperature and pressure, sufficient to provide a vapor phase and a liquid phase. The second separator is sized with respect to the throughput of ammonia such that there is adequate headspace to allow a vapor phase. The operating temperature and pressure of the second separator is typically higher than the operating temperature and pressure of the first separator because of the desirability of providing enriched ammonia vapor to the manufacturing tool at an elevated temperature and pressure. A most preferred operating pressure is about 750 pounds per square inch gauge (psig). The second separator can take the form of any processing and/or storage vessel or tank or a heat pump vaporizer wherein temperature and/or pressure can be regulated. A heat pump vaporizer is most preferred.

In the vaporizer of the type disclosed in Figure 4, the temperature can be set to any value corresponding to the vapor pressure required by the manufacturing tools. For instance, if the manufacturing tools require an inlet ammonia pressure of 750 psig, vaporization temperature can be set at about 90 °C. Transfer of ammonia liquid between the condenser and vaporizer can be carried out with a compressor, preferably by a heat pump apparatus as described in U.S. Patent Application Serial No. 09/383,699.

The process of the present invention operates continuously or semi-continuously as desired. Continuous operation is preferred.

It will be apparent to one skilled in the art that the process and apparatus of the present invention may have or employ ancillary equipment such as pumps, compressors, flow regulators, digital or analog gauges, thermocouples, and the like.

The present invention is useful in semiconductor manufacturing processes. The present invention is particularly useful in gallium nitride semiconductor manufacturing processes. The present invention is also useful in other manufacturing processes that employ ammonia as a cleaner and remover.

The following are non-limiting examples of the present invention. Unless otherwise indicated, all percentages and parts are by weight.

### EXAMPLES

Tests were carried out to investigate the potential performance of the gas separation membranes as described in this invention. For a pressure across a membrane (fabricated from a Nafion® polymer) at about 0.5 atmospheres, the ammonia permeability was found to increase from about 16778 barrer to about 45015 barrer as the operating temperature was reduced from about 23 °C to about 4 °C. The permeability enhancement due to decreasing temperature increases with increasing drive force (or feed pressure for a given downstream pressure).

Further tests were conducted to determine the permeation of impurities. These results are summarized in the following table.

| Effect of Feed Temperature on Membrane Separation Efficiency | | | | |
|---|---|---|---|---|
| **T (°C)** | **23 °C** | | **2 °C** | |
| **Gas Impurity** | **Feed (ppm)** | **Permeate (ppm)** | **Feed (ppm)** | **Permeate (ppm)** |
| H₂ | 81.85 | 2.10 | 79.90 | 0.94 |
| N₂ | 80.33 | 0.44 | 86.12 | 0.49 |
| O₂ | 87.18 | 0.86 | 90.17 | 0.77 |
| CO | 74.71 | 0.32 | 73.46 | 0.25 |
| CH₄ | 82.36 | 0.5 | 80.32 | 0.33 |
| NH₃ Recovery (%) | | 97.04 | | 98.29 |

As can be seen from the foregoing, the percent recovery of ammonia and ammonia purity increases with decreasing temperature.

It should be understood that the foregoing description is only illustrative of the present invention. Various alternatives and modifications can be devised by those skilled in the art without departing from the invention. Accordingly, the present invention is intended to embrace all such alternatives, modifications and variances that fall within the scope of the appended claims.

## Claims

1. A method of enriching a crude ammonia stream having moisture and/or metal impurities and/or gas impurities therein, which comprises:
condensing said crude ammonia stream to form a crude liquid ammonia stream; and
contacting a distillation membrane or pervaporation membrane with said crude liquid ammonia stream, wherein an enriched ammonia vapor stream is removed as a permeate.

2. A method according to Claim 1, wherein said crude ammonia stream originates from a manufacturing tool, and wherein said enriched ammonia vapor stream is recycled to said manufacturing tool.

3. A method according to Claim 1, wherein said enriched ammonia vapor stream contacts a gas separation membrane, wherein a further-enriched ammonia vapor stream is removed as a permeate.

4. A method according to Claim 3, wherein said crude ammonia stream originates from a manufacturing tool, and wherein said further-enriched ammonia vapor stream is recycled to said manufacturing tool.

5. A method according to Claim 3, wherein said crude ammonia stream contacts a thermal swing adsorber prior to condensation.

6. A method of enriching a crude ammonia stream having moisture and/or metal impurities and/or gas impurities therein, which comprises:
separating said crude ammonia stream via a first separator into a first crude ammonia liquid stream and a first crude ammonia vapor stream;
contacting a gas separation membrane with said first crude ammonia vapor stream, wherein a first enriched ammonia vapor stream is removed as a permeate;
passing said first enriched ammonia vapor stream to said first separator;
separating said first crude ammonia liquid stream via a second separator into a second crude ammonia liquid stream and a second enriched ammonia vapor stream as a product stream;
contacting a gas distillation membrane with said second crude ammonia liquid stream, wherein a third enriched ammonia vapor stream is removed as a permeate; and
passing said third enriched ammonia vapor stream to said first separator.

7. A method according to Claim 6, wherein said crude ammonia stream originates from a manufacturing tool, and wherein said product stream is recycled to said manufacturing tool.

8. A system for enriching a crude ammonia stream having moisture and/or metal impurities and/or gas impurities therein, which comprises:
a condenser for condensing said crude ammonia stream to form a crude liquid ammonia stream; and
a distillation membrane or pervaporation membrane for producing an enriched ammonia vapor permeate from said crude liquid ammonia stream.

9. A system according to Claim 8, wherein said crude ammonia stream originates from a manufacturing tool, the system comprising a conduit for recycling said enriched ammonia vapor stream to said manufacturing tool.

10. A system according to Claim 8, comprising a gas separation membrane for producing a further-enriched ammonia vapor permeate from said enriched ammonia vapor.

11. A system according to Claim 10, wherein said crude ammonia stream originates from a manufacturing tool, the system comprising a conduit for recycling said further-enriched ammonia vapor stream to said manufacturing tool.

12. A system according to Claim 10, comprising a thermal swing adsorber disposed upstream of said condenser.

13. A system for enriching a crude ammonia stream having moisture and/or metal impurities and/or gas impurities therein, which comprises:
a first separator for forming a first crude ammonia liquid stream and a first crude ammonia vapor stream from said first crude ammonia stream;
a gas separation membrane for separating a first enriched ammonia vapor stream from said first crude ammonia vapor stream;
a first conduit for conveying said first enriched ammonia vapor stream to said first separator;
a second conduit for conveying said first crude ammonia liquid stream to a second separator for separating a second crude ammonia liquid stream and a second enriched ammonia vapor stream from said first crude ammonia liquid stream;
a gas distillation membrane for separating from said second crude ammonia liquid stream a third enriched ammonia vapor stream; and
a third conduit for conveying said third enriched ammonia vapor stream to said first separator.

14. A system according to Claim 13, wherein said crude ammonia stream originates from a manufacturing tool, the system comprising a fourth conduit for recycling said product stream to said manufacturing tool.
